# NEUE EUROPÄISCHE PATENTSCHRIFT

(11) **EP 2 129 719 B2**
(45) Veröffentlichungstag und Bekanntmachung des Hinweises auf die Entscheidung über den Einspruch: **22.04.2020**
(45) Hinweis auf die Patenterteilung: 05.08.2015
(21) Anmeldenummer: 08714771.6
(22) Anmeldetag: 20.03.2008
(51) Int. Cl.: C08L 23/04, C08L 23/16

(54) **TIEFVISKOSE POLYMERMISCHUNG**
LOW VISCOSITY POLYMER MIXTURE
MÉLANGE POLYMÈRE À FAIBLE VISCOSITÉ

(30) Priorität: 23.03.2007 DE 102007014620
(43) Veröffentlichungstag der Anmeldung: 09.12.2009
(73) Patentinhaber: Innogel AG, 6331 Hünenberg (CH)
(72) Erfinder: MÜLLER, Rolf, CH-8055 Zürich (CH); INNEREBNER, Federico, CH-8049 Zürich (CH)
(74) Vertreter: Becker & Kurig Partnerschaft Patentanwälte PartmbB
(86) Internationale Anmeldenummer: PCT/CH2008/000121
(87) Internationale Veröffentlichungsnummer: WO 2008/116334

(56) Entgegenhaltungen:
- WO-A-2006/042433
- US-A- 5 219 903
- US-A1- 2002 041 972
- US-A1- 2002 198 121
- US-A1- 2003 069 346
- US-B2- 7 192 909
- Färb- und Additivmasterbatches in der Praxis, page 28,29,
- Färb- und Additivmasterbatches in der Praxis, page 37,
- Färb- und Additivmasterbatches in der Praxis, page 91,
- Saechtling Kunststofftaschenbuch, 2001, page 423,
- Clariant Produktdatenblatt, page 4,
- Clariant Produktdatenblatt, page 5,
- International Plastics Handbook, page 21,
- International Plastics Handbook, page 22,
- "Functional Additives for the Plastics Industry", RAPRA Publishing", , 1998,
- Wikipedia (BKS2)

## Beschreibung

Die vorliegende Erfindung betrifft eine Polymermischung mit tiefer Viskosität womit die Verfahren zur Verarbeitung von Kunststoffen beschleunigt werden können, ohne dass die Endeigenschaften des Kunststoffprodukts beeinträchtigt werden, im Gegenteil, sogar noch verbessert werden können. Dabei wird die Polymermischung in der Art eines Additivs den Kunststoffen zugemischt. Weiter betrifft die Erfindung die Herstellung solcher geeigneter Polymermischungen und deren Einsatz in der Kunststoffindustrie.

### Kurze Beschreibung der Erfindung

Die Verarbeitung von thermoplastischen Polymeren erfolgt in den meisten Fällen über eine hochviskose Schmelze. Um die Verarbeitbarkeit dieser Schmelze zu erleichtern, werden verschiedene Additive, sogenannte Lucbricants eingesetzt. Fettsäure Derivate wie Fettsäure Ester oder Fettsäure Amide (z.B. Erucamide, Loxamide OP), metallische Seifen wie Calcium Stearat, Glycerin Monostearat (z.B. Loxiol GMS 95), oder Montanwachse (z.B. Hostalub WE 40) sind schon lange im Gebrauch. Sie verbessern als Schmiermittel den Prozess, sind aber in der Polymermatrix nicht stabil, selten homogen verteilt und migrieren an die Oberfläche, wodurch unerwünschte Oberflächen Effekten entstehen. Ähnlich verhalten sich Fluoropolymere und Silicone, wobei mit den ultra high molecular weight Siliconen von Dow Corning betreffend der Migration eine Verbesserung erzielt werden konnte. Allerdings sind diese Silicone teuer und bilden eine separate Phase aus. Eine Auflistung von Lubricants findet sich bsw. in "Functional Additives for the Plastics Industry", von P. Dufton, Rapra Industry Analysis Report Series, 1998. Polypropylen Wachse sowie Polyethylen Wachse und Fischer Tropsch Wachse werden ebenfalls als Additive für Prozessverbesserungen eingesetzt, aber insbesondere bei höheren Anteilen dieser Wachse wird keine ausreichend homogene Mischung mit dem zu verarbeitenden Polymer erhalten, sodass es zu Fehlern bei den Endprodukten kommt und somit das Potential dieser Wachse bisher nicht ausgeschöpft werden konnte. Die Schwierigkeit der Mischung solcher Wache mit Polymeren hat ihre Ursache darin, dass die Viskositäten der beiden Polymere sich um mehrere Grössenordungen unterscheiden. Die Homogenisierung von Komponenten mit unterschiedlicher Viskosität ist umso schwieriger, je grösser der Unterschied der Viskositäten ist und je höher der Anteil der niederviskosen Komponente ist. Da der Effekt betreffend die Prozessbeschleunigung mit abnehmender Viskosität des Wachses und mit zunehmendem Anteil des Wachses stärker wird, sind die Anforderungen an die Mischtechnik besonders gross. Ein geeigneter PE Wachs weist bei 140°C bsw. eine Viskosität von 10mPas auf, während ein typisches Spritzguss PE eine Viskosität bei 140°C im Bereich von 10'000 - 100'000 mPas aufweist. Der Unterschied der Viskositäten beträgt also 3 bis 4 Grössenordnungen. Typische Verarbeitungsextruder haben zwar eine Mischfunktion, die für das Dispergieren von Masterbatches ausreichend ist, in den meisten Fällen aber für das Homogenisieren von mehr als 1 bis 2% Wachs in einer Polymerschmelze nicht ausreicht, sodass Inhomogenitäten entstehen, die zu Fehlern in den Endprodukten führen. WO 2006/042433 beschreibt Polymermischungen aus Polyethylen, die eine verbesserte Verarbeitung ermöglichen.

Die Erfindung löst die beschriebenen Probleme dadurch, dass einerseits kurzkettige Polymere P2 eingesetzt werden, die mit dem zu verarbeitenden langkettigen Polymer P0 kompatibel sind und andererseits eine Vormischung von Polymer P2 und einem langkettigen Polymer P1 mit hohem Anteil des kurzkettigem Polymer P2 zum Einsatz kommt, wobei das Polymer P1 mit Polymer P0 mischbar, insbesondere mindestens teilweise kompatibel ist. Kompatibilität zwischen zwei Polymeren besteht dann, wenn mindestens ein Teil des einen Polymers mit derselben Kristallstruktur kristallisiert wie mindestens ein Teil des anderen Polymers oder wenn die beiden Polymere zumindest teilweise mischbar sind. Durch die Kristallite werden die kurzkettigen Polymere P2 im Endprodukt fixiert und können nicht migrieren, sie nehmen am teilkristallinen Netzwerk von Polymer P1 teil und tragen durch einen erhöhten kristallinen Anteil im Endprodukt sogar zu einem erhöhten E-Modul bei. Bei der Vormischung von Polymer P1 und P2 kann, ein geeignetes Verfahren eingesetzt werden, dass eine homogene Mischung von Polymeren mit stark unterschiedlicher Viskosität erlaubt, da dieses Verfahren von der Verarbeitung von P0 entkoppelt ist. Die Viskosität der Vormischung bzw. des Additivs liegt dann infolge des Anteils an P1 deutlich oberhalb der Viskosität von P2 und kann mit typischen Verarbeitungsextrudern zusammen mit anderen Polymerschmelzen auch bei grösseren Anteilen bis 10% und mehr problemlos homogenisiert werden.

### Ausführliche Beschreibung der Erfindung

Die Erfindung stellt ein Additiv in Form einer Polymermischung gemäß Ansprüchen 1 bis 11 bereit, welche ein langkettiges Polymer P1 und ein kurzkettiges Polymer P2 aufweist, wobei dieses Additiv einem Polymer P0 oder einer Polymermischung M0 enthaltend P0, in Form von Pulver oder Granulat, beigemischt wird, sodass bei der Verarbeitung von P0 bzw. M0 in Folge des Additivs eine Prozessoptimierung, insbesondere eine Prozessbeschleunigung, erreicht werden kann, ohne dass die Eigenschaften des Endprodukts beeinträchtigt werden, vorzugsweise sogar verbessert werden. Durch den Einsatz des Additivs können kurzkettige Polymere, die schwer mit langkettigen Polymeren homogenisierbar sind, einfach und maximal, sowie ohne Nachteile für verschiedene Polymerverarbeitungsverfahren genutzt werden. Die Wirkungsweise der kurzkettigen Polymere besteht darin, dass sie aufgrund ihrer sehr tiefen Viskosität die hohe Viskosität von Polymerschmelzen herabsetzen, wodurch sich verschiedene Prozessverbesserungen ergeben. Beim Spritzguss bsw. können Zykluszeiten um typischerweise 30% reduziert werden. Im Folgenden wird das erfindungsgemässe Additiv beschrieben, sowie dessen Herstellung und Nutzen.

Das Additiv weist ein langkettiges Polymer P1 und ein kurzkettiges Polymer P2 auf, wobei das kurzkettige Polymer P2 mindestens einen Block von gleichen Monomeren aufweist und das langkettige Polymer P1 mindestens einen ähnlich langen oder längeren Block von denselben Monomeren aufweist. Unter diesen Bedingungen ist es möglich, dass das kurzkettige Polymere P2 mit dem langkettigen Polymer P1 kompatibel ist, d.h. ein Kristallit kann sowohl Blöcke von P2 als auch von P1 aufweisen.

Das langkettige Polymer P1 ist dabei nicht einfach ein Trägerstoff für das kurzkettige Polymer P2 und das Additiv damit nicht als Masterbatch zu verstehen. P1 ist einerseits notwendig, damit P2 beim den diversen Polymerverarbeitungsverfahren einfach mit P0 homogenisiert werden kann, andererseits wurde gefunden, dass die Endeigenschaften von P0 + P1 + P2 oft besser sind, als von P0 + P2, selbst wenn P2 vollständig mit P0 homogenisiert worden ist. Somit ist P1 sowohl für das Verfahren als auch für das Endprodukt von Bedeutung, wobei mit einer gezielten Auswahl von P1 gezielte Modifikationen der Endeigenschaften erhalten werden können.

### Langkettiges Polymer P1

Neben der Kompatibilität mit dem kurzkettigen Polymer P2 muss das langkettige Polymer P1 eine genügend hohe Viskosität aufweisen, damit in der Mischung mit P2 eine gegenüber P2 deutlich erhöhte Viskosität erhalten werden kann.

Das Gewichtsmittel des Molekulargewichts Mw in g/mol von P1 ist > 20'000. In einer bevorzugten Ausführung ist dieses Molekulargewicht > 30'000, bevorzugter > 50'000, noch bevorzugter > 70'000, am bevorzugtesten > 90'000. Die obere Grenze für das Molekulargewicht Mw für Polymer P1 ist durch die Plastifizierbarkeit gegeben und liegt bei < 6'000'000. In einer bevorzugten Ausführung liegt diese Grenze bei < 5'000'000, noch bevorzugter bei < 4'000'000, am bevorzugtesten bei < 3'000'000.

Das Zahlenmittel des Molekulargewichts Mn in g/mol von P1 ist > 20'000. In einer bevorzugten Ausführung ist dieses Molekulargewicht > 30'000, vorzugsweise > 40'000, noch bevorzugter > 50'000, am bevorzugtesten > 70'000.

Anstelle des Molekulargewichts ist für praktische Zwecke eine Charakterisierung mittels des MFI jedoch besser geeignet, da einfacher zu messen. Der bei Standardtemperatur in g/10min bei 2.16kg gemessene MFI von P1 liegt bei < 100, vorzugsweise < 50, noch bevorzugter < 30, am bevorzugtesten < 15. Die untere Grenze für den MFI von P1 liegt bei > 0.01, vorzugsweise > 0.1, noch bevorzugter > 0.3, am bevorzugtesten > 1. Bei PE und PP ist die Standardtemperatur 190°C. Bei anderen Polymeren liegt die Temperatur rund 20 - 40°C oberhalb des für das Polymer typischen Schmelzpunktes.

Je höher das Molekulargewicht bzw. je tiefer der MFI von P1, umso weniger davon wird in der Mischung mit P2 benötigt, um eine ausreichende Viskosität zu erhalten, umso konzentrierter ist dann das Additiv bezüglich P2 und umso weniger Additiv muss für eine bestimmte Prozessoptimierung eingesetzt werden, d.h. umso kostengünstiger ist dann das Additiv. Andererseits wird die Herstellung des Additivs umso schwieriger und aufwändiger, je höher das Molekulargewicht bzw. je tiefer der MFI von P1 ist, da der Unterschied der Viskosität von P1 und P2 grösser wird.

Grundsätzlich kann das Polymer P1 irgendein Polymer sein. Es wird bsw. aus folgender Gruppe ausgewählt: Polyolefine, insbesondere Polyolfine aus Monomeren mit 2 bis 10 C-Atomen, PE, insbesondere UHMWPE, HMWPE, HDPE, LDPE, LLDPE, VLDPE, PP, insbesondere Isot. PP, syndiot. PP, atakt. PP, PE-PP Copolymere, PE-Copolymere, PP-PE Copolymere, PP Copolymere, PVA, PVC, PC, PA, PU, ABS, PS, SAN, POM, CA, PMMA, PPE, PPS, PSO, PTFE, PET, PBT. Aufgrund der Marktgrösse sind die Polyolefine, insbesondere PE und PP, die wichtigste Stoffgruppe. P1 kann auch eine Mischung von verschiedenen Typen aus derselben Kunststoffklasse sein, z.B. verschiedene PE-Typen oder verschiedene PP-Typen. Ausserdem kommen auch die aus den genannten Kunststoffklassen und -typen abgeleiteten Copolymere (mit einem Anteil an einem zweiten Monomer Typ) sowie Terpolymere (mit einem Anteil an einem zweiten und dritten Monomer Typ) und höhere Copolymere (mit mehr als 3 Monomer Typen) in Frage, wobei die zusätzlichen Monomere statistisch und/oder in Blockform angeordnet sein könne.

In einer bevorzugten Ausführung liegt bei Copolymeren der Anteil von zusätzlichen Monomeren in Gew.% bei < 40, vorzugsweise < 20, noch bevorzugter bei < 10, am bevorzugtesten bei < 5, wenn als Polymer P2 ein mit den überwiegenden Monomeren von P1 kompatibles Polymer eingesetzt wird, dessen Anteil an Copolymer in Gew.% < 20, vorzugsweise < 15, noch bevorzugter < 10, am bevorzugtesten < 5 ist, wobei die Monomere des Copolymer Anteils von Polymer P1 und P2 nicht identisch sein müssen, vorzugsweise aber identisch sind.

In einer bevorzugten Ausführung liegt bei Polyolefinen, wenn die zusätzlichen Monomere ebenfalls olefinisch sind wie bsw. bei PP-PE und PE-PP Copolymeren, liegt der Anteil von solchen zusätzlichen Monomeren in Gew.% bei < 50, vorzugsweise < 30, noch bevorzugter < 20, am bevorzugtesten bei < 10, wenn als Polymer P2 ein mit den überwiegenden Monomeren von P1 kompatibles Polymer eingesetzt wird, dessen Anteil an Copolymer in Gew.% < 20, vorzugsweise < 15, noch bevorzugter < 10, am bevorzugtesten < 5 ist, wobei die Monomere des Copolymer Anteils von Polymer P1 und P2 nicht identisch sein müssen, vorzugsweise aber identisch sind.

In einer bevorzugten Ausführung ist das Polymer P1 mindestens teilweise kristallin. Der kristallinen Anteil in Gew.% ist > 3, vorzugsweise > 5, noch bevorzugter > 7, am bevorzugtesten > 10, wobei der kristalline Anteil mittels Dichtemessung gemäss dem Stand der Technik bestimmt wird.

### Kurzkettiges Polymer P2

Die Viskosität des kurzkettigen Polymers P2 in mPas liegt bei < 10'000. In einer bevorzugten Ausführung liegt diese Viskosität bei < 5'000, vorzugsweise < 3'000, vorzugsweise < 1000, vorzugsweise < 500 vorzugsweise < 200, noch bevorzugter bei < 160, am bevorzugtesten bei < 100. Je tiefer diese Viskosität, umso grösser ist der Effekt betreffend Verbesserung der Fliesseigenschaften. Daher kann die Viskosität des Polymers P2 auch deutlich unterhalb 100mPas liegen, z.B. bei 50 oder 10mPas. Die untere Grenze der Viskosität von P2, wenn P1 ein teilkristallines Polymer ist und P1 und P2 gemeinsam kristallisieren können, liegt in mPas bei > 0.1, vorzugsweise > 0.5, noch bevorzugter > 1, am bevorzugtesten bei > 2. Der Grund für die untere Grenze liegt darin, dass bei P2 mit zu tiefen Viskositäten, d.h. mit zu tiefem Molekulargewicht, die Endeigenschaften im Endprodukt beeinträchtigt werden können.

Die Viskosität von P2 wird bei einer Temperatur von rund 10°C oberhalb des Schmelzpunktes des zugehörigen langkettigen Polymers P1 gemessen. Bei kurzkettigen PE liegt diese Temperatur bei 140-150°, bei kurzkettigen PP bei 170-180°C.

Ist P1 nicht teilkristallin und ist keine gemeinsame Kristallisation von P1 und P2 möglich, so liegt die untere Grenze für die Viskosität von P2 in mPas bei > 1, vorzugsweise > 3, noch bevorzugter > 6, am bevorzugtesten > 10, da die Polymere P2 mit zunehmender Viskosität schwerer werden und weniger migrieren.

In einer bevorzugten Ausführung ist das Polymer P2 vorwiegend linear, vorzugsweise vollständig linear und weist mindestens einen Block von > 10, vorzugsweise > 14, noch bevorzugter > 17, am bevorzugtesten > 20 gleichen Monomereinheiten M2 auf. In den meisten Fällen besteht P2 ausschliesslich aus Monomereinheiten M2. Die Definition von Monomereinheiten ist im Allgemeinen klar. Bei PE wird eine Einheit mit 2 C-Atomen als Monomereinheit verstanden, sowohl bei kurzkettigen als auch bei langkettigen PE.

Bei linearen Polymeren P2 nimmt die Viskosität erwartungsgemäss mit Mw, dem Gewichtsmittel des Molekulargewichts, zu. Bei verzweigten, insbesondere bei hochverzweigten Polymeren liegt jedoch die Viskosität bei deutlich tieferen Werten im Vergleich mit linearen Polymeren mit gleichem Mw. So hat bsw. das hyperverzweigte Polyethylen VY BAR 825 von Baker Petrolight mit Mw = 4760 bei 140°C eine Viskosität von rund 18mPas, während ein lineares Polyethylen mit demselben Mw eine Viskosität von rund 300mPas aufweist.

Daher weist in einer anderen bevorzugten Ausführung das Polymer P2 eine verzweigte, insbesondere hyperverzweigte Struktur, am bevorzugtesten eine sphäroide Form auf. Dann ist es möglich, mit vergleichsweise schweren Polymeren P2, die wenig oder gar nicht migrieren und einen positiven Einfluss auf die Zähigkeit haben können, eine tiefe Schmelzviskosität zu erhalten.

In einer bevorzugten Ausführung weist die Molekulargewichtsverteilung von Polymer P2 eine Polydispersität PD = Mw/Mn von < 10, vorzugsweise < 5, noch bevorzugter < 3, am bevorzugtesten < 2 auf. Mit abnehmender Polydispersität werden bezüglich Prozessbeschleunigung und den Endeigenschaften bessere Resultate erhalten. Deshalb sind monodisperse oder nahezu monodisperse Verteilungen mit PD nahe 1 besonders vorteilhaft. Sehr gute Resultate wurden mit kurzkettigen PE mit PD von rund 1.1 erhalten.

In einer bevorzugten Ausführung ist der Dampfdruck in mBar bei 250°C von Polymer P2 < 100, vorzugsweise < 30, vorzugsweise < 10, vorzugsweise < 1, noch bevorzugter < 0.1, am bevorzugtesten < 0.01. Damit wird sichergestellt, dass bei der Aufbereitung und Verarbeitung von Schmelzen enthaltend Polymer P2 ein Vakuum angelegt werden kann, ohne dass das Polymer P2 dabei aus der Schmelze abgezogen wird.

Das kurzkettige Polymer P2 kann grundsätzlich irgendein Polymer sein und wird bsw. aus folgender Gruppe kurzkettiger Polymere ausgewählt: kurzkettige PE, PE-Copolymere, PE-PP Copolymere, PP, PP-Copolymere PP-PE Copolymere, PVA, PVC, PC, PA, PU, ABS, PS, SAN, POM, CA, PMMA, PPE, PPS, PSO, PTFE, PET, PBT. Sie werden bsw. mittels Degradation (z.B. thermisch, metallkatalysiert) aus den entsprechenden langkettigen Polymeren hergestellt, oder a priori in kurzkettiger Form synthetisiert, wobei entsprechend dem Stand der Technik verschiedene Polymerisationssysteme zur Verfügung stehen. Kurzkettige Polymere P2 können auch Mischungen verschiedener Typen von P2 aus derselben Kunststoffklasse sein, z.B. verschiedene Typen von PE Wachsen.

Von kurzkettigen PE gibt es eine breite Auswahl auf dem Markt, sie werden bsw. aus folgender Gruppe ausgewählt: n-Alkane CₙH₂ₙ₊₂; Iso-Alkane Cₙ; zyklische Alkane CₙH₂ₙ; Polyethylen-Wachse; Paraffine und Paraffin-Wachse mineralischen Ursprungs wie makrokristalline, intermediate oder mikrokristalline Paraffine, spröde, duktile, elastische oder plastische mikrokristalline Paraffine; Paraffine und Paraffin-Wachse synthetischen Ursprungs. Bevorzugt sind PE Wachse, Fischer-Tropsch Wachse sowie hoch und hyperverzweigte Polyolefine.

Bevorzugte PE und PP Wachse werden durch Synthese mittels Polymerisation erhalten, z.B. durch Ziegler Natta Polymerisation Philipps Polymerisation (Chrom Oxid Katalysatoren), Radikalische Polymerisation, Metallozene Polymerisation, wobei die Metallozene Polymerisation besonders bevorzugt ist.

### Mischungen der Polymere P1 und P2

Um die vorteilhaften Effekte des kurzkettigen Polymers auf das Verarbeitungsverhalten und die Endeigenschaften zu ermöglichen, müssen Polymer P1 und P2 kompatibel sein. Kompatibilität bedeutet hier, dass P1 mindestens einen Block mit > 10 Monomereinheiten M1 und P2 mindestens einen Block mit > 10 Monomereinheiten M2 aufweist, wobei M1 identisch mit M2 ist. Ist P1 ein teilkristallines Polymer bedeutet Kompatibilität zwischen P1 und P2, dass beide Polymere miteinander kristallisieren können. Sind die Polymere P2 in Kristallite mit P1 eingebunden, wird deren Migration unterbunden und können sie einen nützlichen Beitrag zu den mechanischen Eigenschaften leisten.

Bei P2 in Form von hoch- und hyperverzweigten bzw. sphäroiden kurzkettigen Polymeren, ist zwar Kompatibilität aber nicht gemeinsame Kristallisation von P1 und P2 zwingend und die Migration wird durch ein höheres Molekulargewicht der sphärodien Polymere verhindert wird. Ist Polymer P1 vollständig oder hauptsächlich amorph, so werden gegebenenfalls ebenfalls P2 mit höherem Molekulargewicht eingesetzt, um die Migration zu verhindern. Die Bedingung der Kompatibilität ermöglicht auch in diesem Fall eine gute Mischbarkeit von P1 und P2.

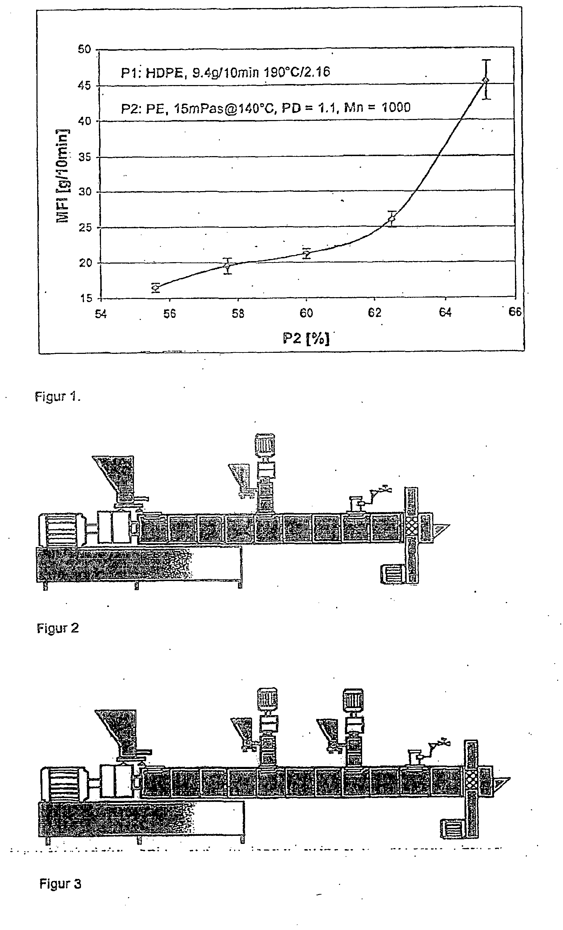

In Fig. 1 ist der Melt Flow Index (MFI) bei 140°C und 1.2kg von Mischungen des langkettigen Polymers P1 und des kurzkettigen Polymers P2 in Funktion des Anteils an P2 dargestellt. Mit dem Additiv bestehend aus P1 und P2 soll ein möglichst hoher Anteil an P2 mit einer möglichst hohen Viskosität der Mischung von P1 und P2 kombiniert werden, um eine möglichst hohe Effektivität des Additivs hinsichtlich Prozessbeschleunigung mit einer einfachen Einarbeitung in das zu verarbeitende Polymer P0 zu ermöglichen. Der MFI verhält sich in etwa umgekehrt proportional zur Viskosität. Eine möglichst hohe Viskosität bei möglichst hohem Anteil an P2 entspricht daher einem möglichst tiefen MFI bei möglichst hohem Anteil an P2. Aus Fig. 1 wird ersichtlich, dass oberhalb von P2 = 62% ein steiler Anstieg des MFI stattfindet. Daher liegt in diesem Bereich von P2 das Optimum für die gestellte Aufgabe. Unterhalb 62% liegt der MFI wie auch die Viskosität der Mischung von P1 und P2 im Bereich von P1, während sich oberhalb der MFI und die Viskosität dieser Mischung den entsprechenden Werten von P2 annähern.

Der Übergang zwischen den beiden Bereichen liegt bei dem Beispiel von Fig. 1 bei einem Anteil an P2 von etwa 62%. Wird ein P1 mit tieferem MFI eingesetzt, so verschiebt sich der optimale Anteil an P2 zu höheren Werten und umgekehrt. Darüber hinaus ist zu erwähnen, dass der optimale Anteil nicht nur durch dieses Verhalten bestimmt ist, sondern auch die Parameter der Verarbeitung von P1 und P2 gewisse Bedingungen stellt, z.B. wird die Homogenisierung von P1 und P2 mit abnehmendem MFI von P1 zunehmend schwieriger, insbesondere wenn dies bei wirtschaftlich sinnvollen Durchsätzen geschehen soll.

Der Anteil an Polymer P2 in Gew.% bezogen auf Polymer P2 und Polymer P1 liegt generell bei > 40, vorzugsweise > 43, noch bevorzugter > 45, am bevorzugtesten > 48, bzw. bei < 81, vorzugsweise < 78.

Für die obere Grenze dieses Anteils gilt < F, vorzugsweise < E.

Für die untere Grenze dieses Anteils gilt > A, vorzugsweise > B, noch bevorzugter > C, am bevorzugtesten > D.

Die Werte für A bis D und E bis F hängen vom MFI des Polymers P1 ab und sind für einen weiten Bereich von MFI's in Tabelle 1 aufgeführt. Die Werte für Grenzen für nicht aufgeführte MFI werden durch lineare Interpolation oder Extrapolation erhalten.

**Tabelle 1**

| **MFI von P1** | **A** | **B** | **C** | **D** | | **E** | **F** | | |
|---|---|---|---|---|---|---|---|---|---|
| **[g/10min]** | | | | | | | | | |
| **0.1** | 48 | 53 | 56 | 59 | | 78 | 81 | | |
| **1** | 45 | 49 | 53 | 57 | | 74 | 78 | | |
| **10** | 40 | 45 | 50 | 55 | | 70 | 75 | | |
| **20** | 40 | 44 | 48 | 54 | | 69 | 74 | | |
| **50** | 40 | 43 | 47 | 53 | | 68 | 73 | | |

Für eine einfache Homogenisierung des Additivs in der zu verarbeitenden Polymerschmelze ist der MFI des Additivs eine entscheidende Grösse. Da der MFI des Additivs bei 190°C und 2.16kg, bei den für Polyolefinen üblichen Bedingungen zu dünnflüssig ist, um eine sinnvolle Messung zu ermöglichen, wird der MFI des Additivs rund 10°C oberhalb des Schmelzpunktes gemessen, bei PE bei 140°C und bei PP bei 170°C, sowie bei einem reduzierten Gewicht von 1.2kg. Unter diesen Bedingungen liegt der MFI des Additivs in g/10min im Bereich 0.5 bis 400.

In einer bevorzugten Ausführung liegt die untere Grenze für den MFI des Additivs in g/10min bei >1, vorzugsweise bei >2, noch bevorzugter bei >4, am bevorzugtesten bei >8.

In einer bevorzugten Ausführung liegt die obere Grenze für den MFI des Additivs in g/10min bei <300, vorzugsweise <200, noch bevorzugter <100, am bevorzugtesten <60.

Der angegebene Bereich von 0.5 bis 400g/10min muss im Verhältnis zum MFI des kurzkettigen Polymers P2 gesehen werden. Dieser MFI kann zwar infolge der tiefen Viskosität von P2 nicht experimentell gemessen werden, aber aus Extrapolation des Zusammenhangs zwischen Molekulargewicht und MFI für PE mit mittlerem Molekulargewicht ergibt sich ein MFI für ein typisches P2 im Bereich von etwa 20'000g/10min bei 190°C und 2.16kg. Der MFI Bereich von 0.5 bis 400g/10min entspricht Polyethylenen mit einem Molekulargewicht Mw im Bereich 60'000 bis 150'000, was typisch ist für Polyethylene mit mittlerem Molekulargewicht. Durch die Kombination mit P1 wurde also das kurzkettige Polymer P2 sozusagen in ein Polymer mit mittlerem Molekulargewicht verwandelt. Bei Betrachtung der Viskosität wird der Unterschied noch grösser. Ein typischer Wert für die Viskosität von P2 liegt bei 10mPas, während ein typischer Wert für die Viskosität des Additivs bei rund 10'000mPas liegt. Somit wird deutlich, dass die Viskosität des Additivs gegenüber der Viskosität von P2 um einen Faktor von rund 1000 erhöht werden konnte, um eine einfache und vollständige Homogenisierung des Additivs in einer Polymerschmelze zu ermöglichen.

Die Differenz der Kristallisationstemperaturen von Polymer P1 und Polymer P2 beträgt < 37°C, wobei diese Kristallisationstemperaturen als Onset Temperaturen mittels DSC bei einer Kühlgeschwindigkeit von 20°C/min gemessen werden. In einer bevorzugten Ausführung liegt diese Differenz der Kristallisationstemperaturen in °C bei < 30, vorzugsweise < 20, noch bevorzugter < 15, am bevorzugtesten < 10. Bevorzugt ist dabei die Kristallisationstemperatur von P1 höher als die Kristallisationstemperatur von P2.

Durch diese Bedingung wird sichergestellt, dass P1 und P2 mindestens teilweise zusammen kristallisieren und diese beiden Komponenten in der Mischung von P1 und P2 bei der Verwendung des Additivs mindestens teilweise gleichzeitig schmelzen, wodurch diese Schmelze dann die gegenüber P2 notwendig erhöhte Viskosität aufweist, welche ein einwandfreies Homogenisieren ermöglicht. Wird die Bedingung nicht erfüllt, schmilzt die Komponente P2 des Additivs vorzeitig, wodurch sich ähnliche Probleme ergeben, wie wenn P2 alleine eingesetzt wird, also Heterogenität im Endprodukt.

Es hat sich gezeigt, dass der Schmelzpunkt des Additivs, gemessen als DSC Peak Temperatur (beim Auftreten von mehreren Schmelzpeaks ist der Schmelzpeak mit der höchsten Temperatur relevant) bei einer Aufheizgeschwindigkeit von 20°C/min von Bedeutung ist.

In einer bevorzugten Anwendung liegt dieser Schmelzpunkt des Additivs in °C um < 7, vorzugsweise < 5, noch bevorzugter < 3, am bevorzugtesten < 2 oberhalb des (obersten) Schmelzpunktes von P1 bzw. 0, vorzugsweise > 3, noch bevorzugter > 5, am bevorzugtesten > 7 bei tieferer Temperatur als der (oberste) Schmelzpunkt von P1. Dadurch wird das Aufschmelzen des Additivs in der Anwendung erleichtert. Da das Additiv eine sehr hohe Kristallinität aufweist ist es sehr hart und wird darum bei der Plastifizierung zusammen mit dem Polymer P0 vorwiegend durch Wärmeübergang und weniger durch Eintrag von mechanischer Energie aufgeheizt und geschmolzen. Ist der Schmelzpunkt zu hoch, so wird die Plastifizierung erschwert und ist möglich, dass noch nicht aufgeschmolzene Additiv Partikel in der Schmelze von Polymer P0 vorliegen, sodass die angestrebte Wirkung des Additivs nicht eintritt oder nur nach verstärkter Plastifizierung eintritt, wodurch jedoch der Prozess energieaufwendiger und langsamer wird, während die Zielsetzung eine umgekehrte ist. In Tabelle 2 sind Beispiele zur Beeinflussung des Schmelzpunktes Tm des Additivs über den Schmelzpunkt von P2 ersichtlich, wobei der Schmelzpunkt des Additivs gegenüber P1 um bis zu 15°C reduziert werden konnte. Durch einen möglichst tiefen Schmelzpunkt des Additivs wird beim Einsatz bei der Plastifizierung eines Polymers P0 eine zusätzliche Beschleunigung erhalten, indem die Plastifizierenergie und -zeit reduziert wird.

**Tabelle 2**

| Tm von P2 | Tm von P1 | Tm von P1 + P2 bei 60% P2 |
|---|---|---|
| °C | °C | °C |
| 130 | 140 | 140 |
| 114 | 140 | 129 |
| 81 | 140 | 125 |

Infolge des hohen kristallinen Anteils des Additivs, der im hohen Anteil des kurzkettigen, sehr gut kristallisierbaren Polymer P2 begründet ist, ist das Additiv hart und relativ spröde.

Ein hoher E-Modul des Additivs reflektiert die Qualität des Additivs und liegt in MPa bei > 100, vorzugsweise > 200, noch bevorzugter > 300, am bevorzugtesten > 400. Ebenso reflektiert die Sprödigkeit, gemessen mit der Bruchdehnung in %, die Qualität des Additivs und liegt bei < 100, vorzugsweise < 60, noch bevorzugter < 40, am bevorzugtesten < 20.

### Additiv Typen

**Tabelle 3**

| **Additiv Typen** | | **Zu verarbeitendes Polymer** |
|---|---|---|
| **Polymer P1** | **Polymer P2** | **Polymer P0** |
| | | |
| HDPE | PE Wachs | HDPE, HMWPE, LDPE, LLDPE, VLDPE, PP-PE und PE-PP Copolymere, PE Copolymere |
| HMWPE | | |
| UHMWPE | | |
| LDPE | | |
| LLDPE | | |
| VLDPE | | |
| PE-PP Copolymer | | |
| PE Copolymere | | |
| Isot. PP | Isot. PP Wachs | Isot. syndiot. oder atakt. PP |
| Syndiot. PP | Syndiot. PP Wachs | Syndiot., isot. oder atakt. PP |
| Atakt. PP | Atakt., syndiot. oder isot. PP Wachs | Atakt. isot., oder syndiot. PP |
| PP-PE Copolymere | Isot., oder syndiot. PP Wachs oder PE Wachs | HDPE, HMWPE, LDPE, LLDPE, VLDPE, PP-PE Copolymere, PE Copolymere |
| PP Copolymere | Isot. oder syndiot. PP Wachs | Isot. syndiot. oder atakt. PP |
| PVA | PVA Wachs | PVA |
| PVC | PVC Wachs | PVC |
| PC | PC Wachs | PC |
| PA | PA Wachs | PA |
| PU | PU Wachs | PU |
| ABS | ABS, PS, Acrylnitril, oder Butadien Wachs | ABS |
| PS | PS Wachs | PS |

In Tabelle 3 sind eine Anzahl von Additiv Typen für den Einsatz bei verschiedenen Polymeren und Polymersystemen aufgeführt. Mit dem Begriff Wachs wird hier jeweils ein entsprechendes kurzkettiges, vorwiegend lineares Polymer oder ein stark verzweigtes, vorzugsweise sphäroides Polymer mit tiefer Viskosität verstanden. Die Aufstellung ist nicht einschränkend zu verstehen, sondern soll anhand von Beispielen die Gesetzmässigkeiten, die dem Additiv zugrunde liegen, erläutern. Die Gesetzmässigkeiten bei der Kombination von Polymer P1 und P2 zum Additiv wurden bereits beschrieben wie Kompatibilität von P1 und P2, mindestens teilweise Kristallisierbarkeit von P1 und P2, MFI von P1 und MFI der Mischung von P1 und P2, Viskosität von P2, Abstand der Kristallisationstemperaturen von P1 und P2, sowie Abstand der Schmelztemperatur des Additivs von P1. Bei Einhaltung dieser Bedingungen wird beim Einsatz des Additivs bei der Verarbeitung eines Polymers P0 eine deutliche Beschleunigung des Verfahrens ermöglicht. Dies ist der primäre Zweck des Additivs. Darüber hinaus werden die Endeigenschaften des so hergestellten Produkts im Vergleich mit einem analogen Produkt, das ohne Additiv erhalten wurde, modifiziert. Diese Modifikationen sind individuell für jede Kombination von P1, P2 und P0 und hängen auch von den Parametern der Verarbeitung von P0 plus Additiv zum Endprodukt ab. Die Mechanismen, die dabei grundsätzlich eine Rolle spielen sind wie folgt. Das kristallisierbare Polymer P2 erzeugt im Endprodukt einen erhöhten oder gleichen E-Modul, eine erhöhte oder gleiche Streckgrenze, eine etwas reduzierte oder gleiche Bruchdehnung bzw. Zähigkeit (dies gilt grundsätzlich, die Zähigkeit kann auch infolge des durch das Additiv optimierten Prozesses verbessert werden, d.h. weniger eingefrorene Spannungen). Daneben beeinflusst auch das Polymer P1 des Additivs die Eigenschaften des Endprodukts. Ist bsw. P1 ein HDPE und P0 ein LDPE, so steigt der E-Modul und die Streckgrenze des Endprodukts, während die Bruchdehnung etwas abnimmt, das LDPE wird durch P1 und P2 etwas in Richtung eines HDPEs modifiziert. Ist diese Modifikation erwünscht, so wurde das geeignete Additiv eingesetzt. Sollen die Endeigenschaften weniger stark in die angegebene Richtung verändert werden, ist der Einsatz eines Additivs mit LDPE als P1 angezeigt. Sollen die Endeigenschaften unverändert bleiben oder sogar in die umgekehrte Richtung verändert werden, so kann ein Additiv mit LLDPE oder VLDPE als P1 eingesetzt werden. Die Wirkung auf die Endeigenschaften von P2 kann durch ein solches P1 kompensiert oder sogar umgekehrt werden. Wird ein solches Additiv mit LLDPE oder VLDPE als P1 z.B. bei einem Spritzugss HDPE als P0 eingesetzt, so kann eine merkliche Verbesserung der Zähigkeit im Endprodukt erhalten, wobei E-Modul und Streckgrenze etwa gleich bleiben, da sich P1 und P2 diesbezüglich neutralisieren. Wird ein Additiv mit HMWPE als P1 bei der Verarbeitung eines HDPEs eingesetzt, so können sowohl E-Modul, Streckgrenze und Zähigkeit zunehmen. Anhand dieser Beispiele wurden die Mechanismen aufgezeigt, die bei verschiedenen Kombinationen von P1, P2 und P0 zum Tragen kommen. Diese Mechanismen können von diesen Beispielen aus verallgemeinert werden und von einem Fachmann auf eine spezifische Situation angewendet werden. Während herkömmliche Additive, die als Verarbeitungshilfe und Prozessbeschleuniger eingesetzt werden in ihrer Wirkung diesbezüglich unterlegen sind und in der Regel die Endeigenschaften beeinträchtigen, ermöglicht das erfindungsgemässe Additiv nicht nur grosse Benefits infolge der Prozessbeschleunigung, sondern auch, durch die Auswahl des in einem speziellen Fall optimalen Additivs, eine gezielte und vorteilhafte Modifikation der Endeigenschaften.

Grundsätzlich kann das Additiv neben den Polymeren P1 und P2 weitere Stoffe aufweisen wie bsw. weitere Stoffe, die ebenfalls prozessbeschleunigend wirken, sodass das Prinzip des erfindungsgemässen Additivs mit weiteren ähnlichen Effekten kombiniert werden kann. Ebenso wie das Polymer P2 mittels des Additivs einfach in einer Polymerschmelze homogenisiert werden kann, können auch weitere prozessbeschleunigende Stoffe mittels des Additivs einfach in einer Polymerschmelze homogenisiert werden. Bezüglich der genannten prozessbeschleunigenden Stoffe sei hier auf den Stand der Technik verweisen, sie werden zu tieferen Anteilen eingesetzt als üblich, womit die inhärenten Nachteile nicht auftreten aber doch ein Beitrag zur Prozessbeschleunigung erhalten werden kann. Explizit erwähnt werden hier: Lubricants wie bsw. Fettsäuren und deren Derivate, Wachse, Kopplungs Mittel wie bsw. Titan und Zirkon Komplexe, insb. Monoalkyloxy Titanate und Zirkonate.

Von besonderem Nutzen ist die Zumischung von Nukleierungsmitteln zum erfindungsgemässen Additiv, da hiermit die Kristallisation beschleunigt werden kann. Eine breite Auswahl an Nukleierungsmitteln ist im Stand der Technik beschrieben, die Dosierung des Nukleierungsmittels wird so gewählt, dass beim Einsatz von 5% Additiv darin genügend Nukleierungsmittel enthalten ist, um die vom Hersteller empfohlene Konzentration im Endprodukt zu erreichen. Weiter ist die Zugabe von verschiedenen Additiven, die bei Polymeren im Einsatz sind, bsw. Hitze und UV Stabilisatoren, Antioxidantien, Flammschutzmittel, Antistatika, antimikrobiell wirkende Additive, sowie kettenverlängernde Katalysatoren insbesondere dann sinnvoll, wenn das erfindungsgemässe Additiv im Recycling Bereich eingesetzt wird.

Bezüglich einer Aufzählung diverser Lubricants, Additive und Nukleierungsmittel wird auf den Stand der Technik verwiesen, insbesondere auf: "Functional Additives fort he Plastics Industry", P. Dufton, Rapra Industry Analysis Report Series, 1998, "Handbool fort he chemical analysis of plastic and polymer additives", J. Hubball, Boca Raton, CRC Press 2008, "Plastics additives: advanced industrial analysis", J. C. J. Bart, IOS Press, 2006, "Atlas of plastics additives: analysis by spectrometric methods", D.O. Hummel, Springer 2002, "Handbook of Polyolefins", C. Vasile, Marcel Dekker, 2000.

Eine weiter Gruppe von Stoffen, die dem erfindungsgemässen Additiv zugesetzt werden können, sind partikuläre Stoffe, die auch in der Polymerschmelze ihre partikuläre Form beibehalten, also in Polymer P1 und P2 unlöslich sind, wie bsw. Talkum, Russ oder Pigmente. Diese Stoffe können mit dem Additiv einfach in ein Polymer P0 eingebracht und dispergiert werden, da sie jedoch die Viskosität deutlich reduzieren, ist ihr Anteil in Gew.% bezogen auf P1 und P2 < 20, vorzugsweise < 10, noch bevorzugter < 5, am bevorzugtesten < 1. Wenn das wichtigste Ziel die Prozessbeschleunigung ist, wird auf solche Stoffe im Additiv vollständig verzichtet.

### Vorteile

Die Vorteile bei Verwendung des erfindungsgemässen Additivs bei verschiedenen Verarbeitungsprozessen von Polymerschmelzen ergeben sich dadurch, dass das Additiv sehr gut mit der Polymerschmelze homogenisiert werden kann, sodass durch das kurzkettige Polymer einerseits die Viskosität der Polymerschmelze herabgesetzt wird (reduzierte interne Reibung) und andererseits an der Oberfläche eine Schmierwirkung erhalten wird (reduzierte externe Reibung). Dadurch wird eine deutliche Produktivitätssteigerung ermöglicht: höhere Durchsätze, kürzere Prozesszeiten, reduzierte Zykluszeiten. Eine weitere Optimierung ergibt sich durch die Reduktion oder Elimination von Build Ups an Düsen. Ausserdem ergeben sich Energieeinsparungen, da Drehmomente um 10 bis 30% und Gehäusetemperaturen um 10 bis 40°C deutlich reduziert werden können. Eine um 10 bis 40°C tiefere Schmelztemperatur ermöglicht aber auch ein schonendes Verarbeiten. Somit können thermisch empfindliche Polymere schonender verarbeitet werden oder es können thermisch empfindliche Additive wie bsw. Stabilisatoren in geringerer Menge zugesetzt werden, woraus sich wiederum Einsparungen ergeben, da solche Additive in der Regel teuer sind.

Brandspuren, die sich beim Spritzguss ergeben können, werden reduziert oder eliminiert. Eine weitere vorteilhafte Anwendung des Additivs findet sich bei gefüllten Polymeren. Füllstoffe können z.B. Talk, Mineralien, Fasern, Kohlenstoff, Holz usw. sein und diese Füllstoffe erhöhen jeweils die Viskosität, wodurch die Verarbeitbarkeit der mit Füllstoffen angereicherten Polymere leidet. Der Einsatz des Additivs ermöglicht auch hier eine einfachere und schnellere Verarbeitung, wobei das infolge des Additivs verbesserte Benetzungsverhalten der Polymerschmelze eine Rolle spielt. Ausserdem sind höhere Füllmengen möglich und es können auch thermisch empfindliche Füllstoffe wie Holz und Naturfasern verarbeitet werden. Von besonderem Vorteil ist der Einsatz des Additivs im Recycling Bereich, insbesondere bei der Herstellung von Regranulat. Da die zu rezyklierenden Polymere häufig schwieriger zu plastifizieren sind, d.h. gegenüber den nativen Polymeren eine erhöhte Schmelzviskosität aufweisen, ist das erfindungsgemässe Additiv in diesem Bereich besonders vorteilhaft.

Das Additiv kann grundsätzlich bei allen kunststoffverarbeitenden Verfahren vorteilhaft eingesetzt werden, z.B. beim Spritzguss, Blow Molding, Roto Molding, Folienblasen, Kalandrieren, Compoundieren, insbesondere beim Herstellen von Polymerblends und von Masterbatches, bei der Extrusion von Filmen und Profilen, wobei in jedem Fall eine erhöhte Produktivität und/oder ein reduzierter Energieaufwand erhalten wird. Das Ausmass des Vorteils ist jedoch verfahrens- und maschinenabhängig. Beim Einsatz von 5% des Additivs bei der Verarbeitung eines Polymers P0 wird generell eine Prozessbeschleunigung in % betreffend den Durchsatz von > 3, vorzugsweise > 5, noch bevorzugter > 7, am bevorzugtesten > 10 erhalten. Eine Zunahme der Produktivität um 10 bis 30% ist typisch, wobei je nach Fall noch bessere oder etwas weniger gute Resultate erhalten werden. Sehr gut ist die Prozessbeschleunigung im Spritzgussbereich wo die Prozessbeschleunigung beim Einsatz von 5% des Additivs typischerweise im Bereich 15 bis 35% liegt.

Die Endeigenschaften der Materialien, die mit dem Additiv verarbeitet wurden, werden nicht beeinträchtigt, teilweise sogar verbessert, dies wurde bei Versuchen bei zahlreichen Kunststoffverarbeitern, bei verschiedenen Verfahren und Produkten immer wieder bestätigt. Bei höheren Anteilen des Additivs wird der E-Modul und die Streckgrenze infolge der erhöhten Kristallinität verbessert, während die Zähigkeit teilweise sogar ebenfalls zunimmt, da infolge tieferer Massentemperaturen und besserem Fliessverhalten weniger eingefrorene Spannungen und Verwerfungen resultieren.

Das Additiv wird in der Praxis in Form von Pulver, Pellets oder Granulat eingesetzt. Liegt das zu verarbeitende Polymer P0 in Form von Pulver vor, wird das Additiv bevorzugt als Pulver eingesetzt, liegt das Polymer P0 in Form von Pellets oder Granulat vor, wird das Additiv bevorzugt als Pellets oder Granulat eingesetzt, da sich vergleichbare Formen leichter homogen mischen lassen.

Der Einsatz des Additivs erfolgt in der Praxis typischerweise mit einem Anteil von 1 bis 20%, vorzugsweise von 1.5 bis 15%, noch bevorzugter von 2 bis 12%.

### Verfahren

Zur Herstellung des Additivs können beliebige, batchweise oder kontinuierlich betriebene Mischverfahren benutzt werden, welche sowohl distributiv als auch dispersiv wirken.

Vorteilhaft ist der Einsatz von Extrudern, insbesondere von Doppelschneckenextrudern. Dabei wird so vorgegangen, dass im ersten Teil des Extruders das langkettige Polymer P1 plastifiziert wird, wonach das kurzkettige Polymer P2 in Form von Pulver oder Granulat zugeführt wird und im Kontakt mit der heissen Schmelze von Polymer P1 und unter Einwirkung von mechanischer Energie schmilzt. Danach wird in einem Mischteil mit Knetblöcken homogenisiert, gegebenenfalls evakuiert und durch eine Düse extrudiert (Figur 2).

Eine alternative Variante besteht darin, dass das Polymer P1 bereits mit einem Anteil von Polymer P2 in den Extruder dosiert und diese Mischung plastifiziert und homogenisiert wird, bevor weiteres Polymer P2 zugeführt wird, dies ist besonders bei sehr hohen Anteilen an Polymer P2 und/Oder beim Einsatz von Polymer P1 mit tiefem MFI vorteilhaft. Schliesslich ist auch eine kaskadenartige Zuführung von Polymer P2 möglich, wobei P2 in mehreren Stufen bei verschiedenen Abschnitten des Extruders zugeführt wird (Figur 3).

### Beispiele

### Beispiel 1

Mittels eines gegenläufigen, dichtkämmenden Collin Extruders ZK 50/12D mit 12L/D und D = 50mm wurden Mischungen von P1 = HDPE und P2 = PE Wachs hergestellt, wobei der PE Wachs ein kurzkettiges PE mit einem Molekulargewicht von rund 1000g/mol war und bei 150°C eine Viskosität von rund 10Pas aufwies. Dabei wurde der Anteil an P2 im Bereich von 40 bis 65% variiert. Der Durchsatz lag bei 12kg/h und die Drehzahl bei 120 u/min. Gehäusetemperaturen in °C waren 35/170/170/160/150 (Düse). Da es sich hier um einen kleinen Extruder handelte und eine lange Mischstrecke zur Verfügung stand, konnten das HDPE (in Form von Granulat) und der PE Wachs (in Form von Pulver) zusammen dosiert, dann aufgeschmolzen und vollständig gemischt werden. Die niederviskose Mischung wurde als Strang extrudiert und sogleich in einem Wasserbad von rund 35°C gekühlt, dann granuliert. Das so erhaltene Additiv wurde darauf in verschiedenen kunststoffverarbeitenden Prozessen zugemischt und auf seine Wirkung getestet. Beim Einsatz dieser Mischung als Additiv im Umfang von 3 bis 10% bezogen auf das zu verarbeitende Polymer P0 konnten bsw. die Zykluszeiten beim Spritzgussverfahren um bis zu 35% reduziert werden.

Es wurde festgestellt, dass noch grössere Reduktionen der Zykluszeit an sich möglich sind. Im Allgemeinen kann mit moderneren Spritzguss Maschinen ein grösserer Anteil von diesem Potential umgesetzt werden, dennoch kam zum Ausdruck, dass bei der Konstruktion der Maschinen die Möglichkeit von so extrem kurzen Zykluszeiten nicht berücksichtigt worden ist. Selbst modernste Spritzgussmaschinen sind zu langsam, um das Potential des Additivs vollständig zu nutzen. Während früher das zu verarbeitende Polymer die Grenzen setzte, sind es beim Einsatz des Additivs nun die Maschinen. Dies zeigt eindrücklich, dass mit dem Additiv Neuland betreten wurde. Bei der Konstruktion dieser Maschinen wurde nicht berücksichtigt, dass es einmal möglich sein könnte, die Verarbeitung von Polymeren derart zu beschleunigen, wie dies dank dem Additiv möglich geworden ist. Auch wenn des Potential des Additivs mit heutigen Maschinen noch nicht vollständig genutzt werden kann, so sind dennoch auch die mit diesen Maschinen möglichen Beschleunigungen erheblich und von grossem wirtschaftlichem Nutzen.

### Beispiel 2

Zur Herstellung von Additiv im grosstechnischen Massstab wurde ein dichtkämmenden, gleichdrehender Zweiwellenextruder eingesetzt. Dies ist für die Herstellung von Polymermischungen eine ökonomisch sinnvolle Aufbereitungsmaschine. Als P1 wurde ein HDPE, als P2 ein PE Wachs mit einem DSC Schmelzpeak bei 114°C und einer Viskosität bei 150°C von rund 10 Pas eingesetzt. Der Anteil an P2 lag bei 60% bezogen auf P1+ P2.

Der Schneckenaussendurchmesser lag bei 62mm und der Extruder wies eine Länge von 32 L/D auf. Die Soll-Gehäusetemperaturen wurden folgendermassen eingestellt: Neutral/200/200/200/180/200/180/160. Nach dem Extruder wurde ein Schmelzefilter installiert gefolgt von einer Breitschlitzdüse mit 17 Löchern ä ca. 5mm Durchmesser. Die extrudierten Stränge wurden in einem Wasserbad von 35°C gekühlt. Als Granulations-technik wurde die einfache Stranggranulationsmethode benützt.

Die Schneckenkonfiguration wurde folgendermassen gewählt: eine kurze Einzugszone mit üblicher Förderelementeabfolge von rund 6L/D danach bis zur Verfahrenslänge 21 L/D geeigneten Knetblöcke und Rückförderelemente, sodann. eine kurze Einzugszone, gefolgt von einer Homogenisierungsstrecke über entsprechende Mischelemente. Ab der Verfahrenslänge 29 L/D wurde die Schnecke für die Austragung der Schmelze ausgelegt.

Der Extruder wurde so ausgelegt, dass der grösste Energieeintragungsanteil mechanisch über die Schnecke in das Produkt eingebracht werden konnte. Nur so liessen sich kommerziell interessante Durchsätze erreichen.

P2, einmal aufgeschmolzen, hat eine sehr tiefe Viskosität und weist zudem einen stark schmierenden Effekt auf, was ein Energieeintrag über die Schnecke deutlich senkt. Wird HDPE und PE Wachs gleichzeitig eindosiert, wird zuerst der PE Wachs aufschmelzen. Sobald nur ein kleiner Teil des Wachses aufschmilzt, ist der Extruder kaum in der Lage das HDPE mechanisch aufzuschmelzen. Das HDPE kann nur noch über die Gehäusen durch reine Wärmekonvektion aufgeschmolzen werden. Diese Verfahrensweise ist äusserst ineffizient da die möglichen Durchsätze mit rund 25kg/h sehr gering sind.

Mit der Splitfeeding Technik, konnte in einer ersten Stufe das HDPE über mechanische Energieeintrag aufgeschmolzen und effizient über die Schmelztemperatur aufgeheizt werden, vergl. Fig. 2. Danach wurde der PE Wachs mittels eines Sidefeeders zudosiert. Die heisse HDPE Schmelze wurde durch den kalten PE Wachs abgekühlt. Einerseits muss die Temperatur der PE Schmelze derart hoch sein, dass durch die Abkühlung die HDPE Schmelze nicht einfriert, andererseits wird bei den weiteren Gehäuse durch Konvektion Energie eingetragen. Zudem steigt durch die Abkühlung der HDPE Schmelze deren Viskosität wodurch wiederum der mechanische Energieeintrag begünstigt wird. Mit dieser Verfahrensfahrweise konnten Durchsätze bis 300kg/h erhalten werden, die um Faktoren höher liegen als mit der üblichen Fahrweise, wo beide Komponenten gleichzeitig eindosiert werden. erreicht werden.

Das HDPE wurde im Gehäuse 1 mittels einer volumetrischen Dosierung zeitkonstant eindosiert. Der PE Wachs wurde mittels einer volumetrischen Dosiereinheit zunächst in einem Sidefeeder dosiert. Der Anteil Wachs lag bei 60% des Gesamtdurchsatzes. Mit dem Sidefeeder wurde der PE Wachs in den Extruder reingepresst. Der Sidefeeder wurde gekühlt sodass der Wachs nicht bereits im Sidefeeder aufschmelzen konnte, da dieser ansonsten sein Fördervermögen verliert. Danach wurde in der restliche Verfahrenslänge der Wachs aufgeschmolzen und mit der PE Schmelze homogenisiert. Mit der Splitfeedingtechnik konnten mit der beschriebenen Konfiguration Durchsätze bis 300 Kg/h erreicht werden. Ohne diese Fahrweise lag der Durchsatz bei rund 25 kg/h. Der erreichte Durchsatz kann durch weitere Optimierungen sicherlich noch weiter erhöht werden.

Gleich nach dem Extruder und noch vor der Strangdüse wurde eine Schmelzfiltereinheit eingebaut. Dies hatte nebst der eigentlichen Funktion des Filterns von Festfremdstoffen den Vorteil, dass der Schmelzedruck erhöht werden konnte und dadurch eine bessere Homogenisierung der Schmelze erreicht werden konnte, was insbesondere bei höheren Durchsätzen von Bedeutung ist.

Die Stränge kamen homogen und gleichmässig aus der Düse heraus und liessen sich sehr gut über das Kühlwasser ziehen. Mit einer handelsüblichen Granulationseinheit liessen sich die gekühlten Stränge gut zu Pellets granulieren. Wichtig ist, dass die Temperatur der Stränge bevor diese im Granulator eingeführt werden weder zu kalt (Strang ist dann spröde) noch zu warm (Strang ist zu verformbar und klebrig) sein sollten.

Es hat sich gezeigt, dass die Stränge ab und zu Luftblasen aufweisen. Zu diesem Zweck wurde ein weiterer Versuch mit einer Entgasungsstelle durchgeführt, siehe Figur 2. Bereits mit einem kleinen Unterdruck konnten die Luftblasen eliminiert werden.

### Beispiel 3

Mit der in Beispiel 2 beschriebenen Splitfeedingtechnik kann mit geeigneter Konfiguration die Gehäuseheizleistung als limitierenden Faktor (Beispiel 1) vermieden werden. Und dafür wird zum grössten Teil des Energieeintrages über die Schnecke generiert, dadurch werden entweder der mechanische Energieeintrag oder das Mischungspotential zum limitierenden Faktor, was eine deutlich ökonomische Fahrweise sichert. Im ersten Fall kann die Limitierung durch Verlängerung der HDPE Schmelzzone nach oben verschoben werden. Im Zweiten Fall kann die Homogenisierungsstrecke verlängert werden. Eine andere Möglichkeit um die Homogenisierungsleistung zu verbessern, ist die Kaskadentechnik, wo das Wachs über zwei Stufen eindosiert wird, siehe Figur 3.

## Patentansprüche

1. Additiv, basierend auf einer Polymermischung, **dadurch gekennzeichnet, dass** diese Polymermischung
a) mindestens ein erstes Polymer P1 mit einem Gewichtsmittel des Molekulargewicht Mw > 20 000 g/mol aufweist und Polymer P1 mindestens einen Block mit mindestens 10 Monomereinheiten M1 aufweist,
b) mindestens ein zweites Polymer P2 aufweist, dessen Viskosität bei einer Temperatur von rund 10 °C oberhalb des Schmelzpunkts des zugehörigen Polymers P1 < 10 000 mPas ist und das mindestens einen Block von mindestens 10 Monomereinheiten M1 aufweist, wobei
c) der Anteil an Polymer P2 bezogen auf Polymer P1 und P2 in Gew.% im Bereich > A und < F liegt, wobei
der Wert für A für einen MFI von 0,1 g/10 min des Polymers P1 48 beträgt, für einen MFI von 1 g/10 min des Polymers P1 45 beträgt, für einen MFI von 10 g/10 min des Polymers P1 40 beträgt, für einen MFI von 20 g/10 min des Polymers P1 40 beträgt, und für einen MFI von 50 g/10 min des Polymers P1 40 beträgt, und wobei der Wert A für einen nicht aufgeführten MFI von P1 durch lineare Interpolation oder Extrapolation aus den vorstehenden Werten erhalten wird, und wobei
der Wert für F für einen MFI von 0,1 g/10 min des Polymers P1 81 beträgt, für einen MFI von 1 g/10 min des Polymers P1 78 beträgt, für einen MFI von 10 g/10 min des Polymers P1 75 beträgt, für einen MFI von 20 g/10 min des Polymers P1 74 beträgt, und für einen MFI von 50 g/10 min des Polymers P1 73 beträgt, und wobei der Wert F für einen nicht aufgeführten MFI von P1 durch lineare Interpolation oder Extrapolation aus den vorstehenden Werten erhalten wird; und wobei die Polymermischung gegebenenfalls
d) einen Anteil an partikulären Komponenten, die in der Polymermischung unlöslich sind, bezogen auf die Polymere P1 und P2 in Gew.% von < 20% aufweist,
wobei die Differenz der Kristallisationstemperaturen von Polymer P1 und Polymer P2 < 37°C beträgt, wobei diese Kristallisationstemperaturen als Onset Temperaturen mittels DSC bei einer Kühlgeschwindigkeit von 20°C/min gemessen werden.

2. Additiv nach Anspruch 1, **dadurch gekennzeichnet, dass** das mindestens eine erste Polymer P1 ein Zahlenmittel des Molekulargewicht Mn > 20 000 g/mol aufweist.

3. Additiv nach einem der Ansprüche 1 oder 2, **dadurch gekennzeichnet, dass** der MFI von Polymer P1 bei Standardtemperatur und 2,16 kg im Bereich 0,01 - 100 g pro 10 min liegt.

4. Additiv nach einem der vorangehenden Ansprüche, **dadurch gekennzeichnet, dass** das Additiv einen MFI bei 10°C oberhalb des Schmelzpunktes des Additivs und bei 1,2 kg im Bereich von 0,5 bis 400 g pro 10 min aufweist.

5. Additiv nach einem der vorangehenden Ansprüche, **dadurch gekennzeichnet, dass** bei einer Aufheizgeschwindigkeit von 20°C/min die DSC Peak-Schmelztemperatur des Additivs höchstens 7°C oberhalb der DSC Peak-Schmelztemperatur des Polymers P1 liegt.

6. Additiv nach einem der vorangehenden Ansprüche, **dadurch gekennzeichnet, dass** der E-Modul des Additivs > 100 MPa beträgt.

7. Additiv nach einem der vorangehenden Ansprüche, **dadurch gekennzeichnet, dass** P1 aus folgender Gruppe ausgewählt wird: Polyolefine, PE, wie beispielsweise UHMWPE, HMWPE, HDPE, LDPE, LLDPE, VLDPE, PP, wie bsw. Isot. PP, syndiot. PP, atakt. PP, PE-PP Copolymere, PE-Copolymere, PP-PE Copolymere, PP Copolymere, PVA, PVC, PC, PA, PU, ABS, PS, SAN, POM, CA, PMMA, PPE, PPS, PSO, PTFE, PET, PBT.

8. Additiv nach einem der vorangehenden Ansprüche, **dadurch gekennzeichnet, dass** P2 aus folgender Gruppe kurzkettiger Polymere ausgewählt wird: PE, PE-Copolymere, PE-PP Copolymere, PP, PP-Copolymere, PP-PE Copolymere, PVA, PVC, PC, PA, PU, ABS, PS, SAN, POM, CA, PMMA, PPE, PPS, PSO, PTFE, PET, PBT.

9. Additiv nach einem der vorangehenden Ansprüche, **dadurch gekennzeichnet, dass** P1 ein Polyolefin ist.

10. Additiv nach Anspruch 9, **dadurch gekennzeichnet, dass** P2 ein Polyolefin-Wachs ist.

11. Additiv nach einem der vorangehenden Ansprüche, **dadurch gekennzeichnet, dass** das Additiv in Form von Pulver, Pellets oder Granulat vorliegt.

12. Verwendung des Additivs nach einem der vorangehenden Ansprüche als Additiv bei kunststoffverarbeitenden Verfahren zur Prozessbeschleunigung mittels Herabsetzung der Schmelzviskosität.

13. Verwendung des Additivs nach Anspruch 12, wobei das Additiv mit einem Anteil in Gew.% von 1 bis 20 eingesetzt wird.

14. Verwendung des Additivs nach einem der Ansprüche 1 bis 11 bei der Verarbeitung von thermisch und/oder hydrolytisch empfindlichen Polymeren, von Polymeren mit thermisch empfindlichen Zusatzstoffen, bei der Verarbeitung von gefüllten Polymeren, oder beim Recycling von Kunststoffen.

## Claims

1. Additive based on a polymer mixture, **characterised in that** this polymer mixture
a) comprises at least one first polymer P1 having a weight average molecular weight Mw > 20,000 g/mol, and wherein polymer P1 comprises at least one block of at least 10 monomer units M1,
b) comprises at least one second polymer P2 having a viscosity of < 10,000 mPas at a temperature of approximately 10 °C above the melting point of the respective polymer P1 and which comprises at least one block of at least 10 monomer units M1, wherein
c) the ratio of polymer P2 based on polymer P1 and P2, in % by weight, is in the range > A and < F, wherein
the value of A is 48 for an MFI of 0.1 g/10 min of the polymer P1, is 45 for an MFI of 1 g/10 min of the polymer P1, is 40 for an MFI of 10 g/10 min of the polymer P1, is 40 for an MFI of 20 g/10 min of the polymer P1, and is 40 for an MFI of 50 g/10 min of the polymer P1, and wherein the value A for an MFI of P1 not given is obtained from the above values by linear interpolation or extrapolation, and wherein
the value of F is 81 for an MFI of 0.1 g/10 min of the polymer P1, is 78 for an MFI of 1 g/10 min of the polymer P1, is 75 for an MFI of 10 g/10 min of the polymer P1, is 74 for an MFI of 20 g/10 min of the polymer P1, and is 73 for an MFI of 50 g/10 min of the polymer P1, and wherein the value F for an MFI of P1 not given is obtained from the above values by linear interpolation or extrapolation; and wherein the polymer mixture optionally
d) comprises a proportion of particulate components which are insoluble in the polymer mixture of < 20 % by weight based on the polymers P1 and P2,
wherein the difference in the crystallisation temperatures of polymer P1 and polymer P2 is < 37 °C, wherein the crystallisation temperatures being measured as onset temperatures by DSC at a cooling rate of 20 °C/min.

2. Additive according to claim 1, **characterised in that** the at least one first polymer P1 has a number average molecular weight Mn > 20,000 g/mol.

3. Additive according to any one of claim 1 or claim 2, **characterised in that** the MFI of polymer P1 is in the range of 0.01-100 g per 10 min at standard temperature and at 2.16 kg.

4. Additive according to any one of the preceding claims, **characterised in that** the additive has an MFI in the range of 0.5 to 400 g per 10 min at 10 °C above the melting point of the additive and at 1.2 kg.

5. Additive according to any one of the preceding claims, **characterised in that** at a heating rate of 20 °C/min, the DSC peak melting temperature of the additive is at most 7 °C higher than the DSC peak melting temperature of the polymer P1.

6. Additive according to any one of the preceding claims, **characterised in that** the modulus of elasticity of the additive is > 100 MPa.

7. Additive according to any one of the preceding claims, **characterised in that** P1 is selected from the following group: polyolefines, PE, such as UHMWPE, HMWPE, HDPE, LDPE, LLDPE, VLDPE, PP, such as isotactic PP, syndiotactic PP, atactic PP, PE-PP copolymers, PE copolymers, PP-PE copolymers, PP copolymers, PVA, PVC, PC, PA, PU, ABS, PS, SAN, POM, CA, PMMA, PPE, PPS, PSO, PTFE, PET, PBT.

8. Additive according to any one of the preceding claims, **characterised in that** P2 is selected from the following group of short-chain polymers: PE, PE copolymers, PE-PP copolymers, PP, PP copolymers, PP-PE copolymers, PVA, PVC, PC, PA, PU, ABS, PS, SAN, POM, CA, PMMA, PPE, PPS, PSO, PTFE, PET, PBT.

9. Additive according to any one of the preceding claims, **characterised in that** P1 is a polyolefin.

10. Additive according to claim 9, **characterised in that** P2 is a polyolefine wax.

11. Additive according to any one of the preceding claims, **characterised in that** the additive is in form of powder, pellets or granulate.

12. Use of the additive according to any one of the preceding claims as an additive in plastics processing methods for accelerating the process by reducing the melt viscosity.

13. Use of the additive according to claim 12, wherein the additive is used in a ratio of 1 to 20 % by weight.

14. Use of the additive according to any one of claims 1 to 11 in the processing of thermally sensitive and/or hydrolytically sensitive polymers, of polymers with thermally sensitive additives, in the processing of filled polymers or in the recycling of plastics.

## Revendications

1. Additif à base d'un mélange de polymères, **caractérisé en ce que** ledit mélange de polymères
a) comporte au moins un premier polymère P1 ayant une masse moléculaire moyenne en poids Mw > 20 000 g/mol, et le polymère P1 comportant au moins un bloc pourvu d'au moins 10 unités monomères M1 ;
b) comporte au moins un deuxième polymère P2 dont la viscosité, à une température d'environ 10 °C au-dessus du point de fusion du polymère P1 associé est < 10 000 mPas, et comporte l'au moins un bloc d'au moins 10 unités monomères M1,
c) la proportion en polymère P2, exprimée en % en poids, étant située dans l'ordre > A et < F, par rapport aux polymères P1 et P2,
la valeur de A étant égale à 48 lorsque le polymère P1 présente un MFI de 0,1 g/10 min et étant égale à 45 lorsque le polymère P1 présente un MFI de 1 g/10 min et étant égale à 40 lorsque le polymère P1 présente un MFI de 10 g/10 min et étant égale à 40 lorsque le polymère P1 présente un MFI de 20 g/10 min et étant égale à 40 lorsque le polymère P1 présente un MFI de 50g/10 min et, pour tout MFI de P1 non-mentionné, la valeur de A pouvant être obtenue à partir des valeurs précédemment indiquées par interpolation ou extrapolation linéaires, et
la valeur de F étant égale à 81 lorsque le polymère P1 présente un MFI de 0,1 g / 10 min et étant égale à 78 lorsque le polymère P1 présente un MFI de 1 g/10 min et étant égale à 75 lorsque le polymère P1 présente un MFI de 10 g/10 min et étant égale à 74 lorsque le polymère P1 présente un MFI de 20 g/10 min et étant égale à 73 lorsque le polymère P1 présente un MFI de 50 g/10 min et, pour tout MFI de P1 non-mentionné, la valeur de F pouvant être obtenue à partir des valeurs précédemment indiquées par interpolation ou extrapolation linéaires ; et ledit mélange de polymères comportant le cas échéant
d) une proportion en composants particulaires non-solubles dans le mélange de polymères qui est, exprimée en % poids, < 20 % par rapport aux polymères P1 et P2,
ladite différence entre les températures de cristallisation du polymère P1 et du polymère P2 est < 37 °C, lesdites températures de cristallisation étant mesurées par calorimétrie différentielle à balayage en tant que températures de déclenchement, la vitesse de refroidissement étant de 20 °C / min.

2. Additif selon la revendication 1, **caractérisé en ce qu'**au moins le premier polymère P1 présente une masse moléculaire moyenne en nombre Mn > 20 000 g/mol.

3. Additif selon l'une des revendications 1 ou 2, **caractérisé en ce qu'**à la température standard et à 2,16 kg, le polymère P1 présente un MFI comprise entre 0,01 et 100 g / 10 min.

4. Additif selon l'une des revendications précédentes, **caractérisé en ce qu'**à 10 °C au-dessus du point de fusion dudit additif et à 1,2 kg, ledit additif présente un MFI comprise entre 0,5 et 400 g / 10 min.

5. Additif selon l'une des revendications précédentes, **caractérisé en ce qu'**à une vitesse de réchauffement de 20 °C /min en calorimétrie différentielle à balayage, ledit additif présente une température de fusion dont le sommet est supérieur de 7 °C ou moins par rapport au sommet de la température de fusion que le polymère P1 atteint en calorimétrie différentielle à balayage.

6. Additif selon l'une des revendications précédentes, **caractérisé en ce que** le module d'élasticité dudit additif est > 100 MPa.

7. Additif selon l'une des revendications précédentes, **caractérisé en ce que** P1 est choisi dans le groupe suivant : polyoléfines, PE comme, par exemple, UHMWPE, HMWPE, PE-HD, PE-BD, PE-BDL, PE-TBD, PP comme, par exemple, PP isot., PP syndiot., PP atact., copolymères PE-PP, copolymères PE, copolymères PP-PE, copolymères PP, PVA, PVC, PC, PA, PU, ABS, PS, SAN, POM, CA, PMMA, PPE, PPS, PSO, PTFE, PET, PBT.

8. Additif selon l'une des revendications précédentes, **caractérisé en ce que** P2 est choisi dans le groupe suivant de polymères à courte chaîne : PE, copolymères PE, copolymères PE-PP, PP, copolymères PP, copolymères PP-PE, PVA, PVC, PC, PA, PU, ABS, PS, SAN, POM, CA, PMMA, PPE, PPS, PSO, PTFE, PET, PBT.

9. Additif selon l'une des revendications précédentes, **caractérisé en ce que** P1 est une polyoléfine.

10. Additif selon la revendication 9, **caractérisé en ce que** P2 est une cire de polyoléfine.

11. Additif selon l'une des revendications précédentes, **caractérisé en ce que** ledit additif se présente sous forme d'une poudre, de pellets ou de granulés.

12. Utilisation de l'additif selon l'une des revendications précédentes en tant qu'additif entrant dans des procédés de transformation de matières plastiques, pour ainsi accélérer le processus en abaissant la viscosité à l'état fondu.

13. Utilisation de l'additif selon la revendication 12, ledit additif étant mis en œuvre dans une proportion comprise entre 1 et 20 % en poids.

14. Utilisation de l'additif selon l'une des revendications 1 à 11 lors de la transformation de polymères sensibles aux effets thermiques et/ou à l'hydrolyse, de polymères comportant des additifs sensibles aux effets thermiques, lors de la transformation de polymères comportant un remplissage, ou lors du recyclage de matières plastiques.
